# EUROPEAN PATENT APPLICATION

(11) **EP 4 803 242 A1**
(43) Date of publication of application: **09.09.2026**
(21) Application number: 25161800.5
(22) Date of filing: 05.03.2025
(51) Int. Cl.: B23K 26/082

(54) **ACCURATE DRIFT MEASUREMENT USING REFLECTORS**

(71) Applicant: Raylase GmbH, 82234 Wessling (DE)
(72) Inventor: Ghadimi, Reza, 82229 Seefeld (DE)
(74) Representative: Araujo Edo, Mario

(57) **Abstract**

The invention refers to a laser processing apparatus (10) comprising: a laser processing module (20) for laser-processing a workpiece on a work field (22); a measurement module (30) for performing distance measurements using a measurement beam (MB), wherein the measurement module (30) is optically coupled with the laser processing module (20) to receive and output the measurement beam (MB) from and to the laser processing module (20); at least one scanning unit (24) for scanning the measurement beam (MB) over the work field (22); one or more calibration reflectors (12a, 12b) having a constant spatial relation with respect to the work field (22) and/or with respect to the at least one scanning unit (24); and a processing unit (40) configured for determining drift shifts of the laser processing apparatus (10) based on measured variations of a path length of the measurement beam (MB) to and from the one or more calibration reflectors (12a, 12b) and on corresponding angular deflection setting (α) of the at least one scanning unit (24). The invention further refers to a method of determining a drift shift in such a laser processing apparatus (10) and to a related method of compensating drift shifts in a laser processing apparatus (10).

## Description

### FIELD OF THE INVENTION

The present invention is in the field of applied optics and laser processing. In particular, the invention regards a laser processing apparatus able to measure drift in an improved manner and to a related method for determining a drift shift, as well as to a related method of compensating drif4t shifts.

### BACKGOUND OF THE INVENTION

The use of lasers is nowadays ubiquitous in the material-processing industry. Relevant examples are additive manufacturing (AM), 3d-printing, welding, cutting, marking, or engraving of different materials such as metals or polymers.

In laser-processing techniques, a work laser beam is scanned over a surface of material to be laser-processed using a deflection system, for example an XY pair of rotatable mirrors operated by corresponding galvanometer motors. The rotatable mirrors can be used for directing the work laser beam to a desired target position of the surface to be laser-processed so as to laser-process the material in a controlled manner.

The ability to controllably and repeatedly position the rotatable mirrors with accurate reproducibility is of great importance for the overall precision of the laser processing, since it determines the positional precision of the work laser beam on a work field or on a workpiece being laser processed. Such precision is of increasing importance in the field of laser processing, as the degree of miniaturization and accuracy requirements increases.

Drift is a prominent source of inaccuracy in laser processing, in particular in additive manufacturing. "Drift" typically refers to the progressive deviation of a real position of the work laser beam with respect to an intended position, which can lead to quality defects in the final product. Drift can be influenced by different factors, including mechanical, thermal and electronic factors.

Drift can be thermally induced due to the rotatable mirrors and the galvanometers heating up during operation. This can be due to temperature variations, possibly due to varying environmental temperature and/or to temperature variations in a cooling system of the laser processing apparatus. For example, a temperature variation of 0.5°C of cooling water of a cooling system may lead to a drift greater than 30 µm. Known solutions to control and reduce thermal drift include the use of cooling systems and environmental temperature monitoring.

Drift can have a mechanical origin, for example due to vibrations caused by the laser processing apparatus or by an environment thereof. Further, material deformations can also be a source of drift. Known solutions to control and reduce mechanical drift include the use of vibration dampening and of high-stability components.

At an electronic level, drift can be caused for example by aging electronic components or by variations in an electric power supply fed to the laser processing apparatus. Known solutions to control and reduce electronic drift include the use of feedback control loops and of regular recalibration.

Further, drift can be controlled and minimized using software-based solutions developed to detect and correct drift by correspondingly controlling the galvanometers. Such software-based solutions are typically based on the use of physical models, which can be generated theoretically and/or empirically. The use of machine learning for predictive maintenance schemes is also being explored.

The previously outlined known solutions offer possibilities to control and reduce drift. However, these known solutions are time-consuming and costly, which negatively affects productivity.

Thus, there is room for technical improvement in the field of distance measurement in laser-processing systems.

### SUMMARY OF THE INVENTION

The present invention aims at measuring drift in an improved manner, which also allows compensating drift in an improved manner, overcoming the aforementioned shortcomings of the prior art. This is achieved by a laser processing apparatus according to claim 1, by a method according to claim 10 of determining a drift shift in a laser processing apparatus, and by a method according to claim 15 of compensating drift shifts in a laser processing apparatus. Preferred embodiments of the invention are defined in the dependent claims.

A laser processing apparatus according to a first aspect of the invention comprises a laser processing module, a measurement module, at least one scanning unit, one or more calibration reflectors and a processing unit.

The laser processing module, which may be or comprise an AM-module, is configured for laser-processing a workpiece on a possibly planar work field. The laser processing module may use at least one work laser beam for laser processing the workpiece. The at least one work laser beam may be controllably directed by the at least one scanning unit, which may a component of the laser processing module.

The measurement module is configured for performing distance measurements, preferably interferometric distance measurements, using a laser measurement beam. The measurement module is optically and possibly mechanically coupled with the laser processing module to receive and output a measurement beam from and to the laser processing module. The measurement module may be rigidly attached to the laser processing module, although both modules may be structurally independent.

The laser processing module may correspond to a part or component of the laser processing apparatus in which laser light is generated/inputted and optically configured for laser-processing the workpiece on the work field, while the measurement module may correspond to a part or component of the laser processing apparatus in which laser light is generated/inputted and outputted and optically configured for performing laser-based distance measurements, which may preferably be or comprise interferometric distance measurements.

The measurement module may be or comprise a measurement module as described in EP 4 296 612 A1.

The measurement module may comprise a connection port, possibly a single connection port, configured for optically coupling the measurement module to a distance detection device. In particular, the connection port may be configured for receiving and outputting laser light from and to the distance detection device, which may include or be optically couplable to an interference sensor, such that the measurement module and the distance detection device may implement an interferometer, in particular for performing interferometric distance detection.

Further, the measurement module may comprise a coupling port for optically coupling the measurement module to the laser processing module. When the measurement module is optically coupled to the laser processing module via the coupling port, laser light may be transmitted from the measurement module into the laser processing module and vice versa through the coupling port, and through a corresponding further coupling port of the laser processing module. The measurement module may be mechanically attachable to the laser processing module such as to optically couple, thereby, the measurement module to the laser processing module.

The at least one scanning unit is configured for scanning the measurement beam over the work field. Further, the at least one scanning unit allows directing the measurement beam to each of the one or more calibration reflectors. The at least one scanning unit may comprise a pair of rotatably mirrors tiltable around mutually orthogonal axes, i.e., a so-called XY-scanning unit, possibly including corresponding galvanometers. The at least one scanning unit may be configured for controllably scanning the measurement beam and the work beam over the work field, on which a workpiece being laser-processed by the laser processing module may be arranged.

The laser processing apparatus further comprises one or more calibration reflectors. The one or more calibration reflectors have a constant spatial relationship with respect to the work field and/or with respect to the at least one scanning unit. A "calibration reflector" may refer herein to any element able to reflect the measurement beam, for example a mirror. A material composition of the one or more calibration reflector may be such that the one or more calibration reflector as a reflectivity for the measurement beam of at least 50%, preferably at least 80%, more preferably at least 90%.

For example, the one or more calibration reflector may each comprise a substrate, optionally coated with a reflective layer. The substrate may for example comprise any of SiO2, Al2O3 and/or SiC. The reflective layer may for example comprise a metallic material, for example any of Au, Al, Ag. A reflectivity of over 95% (measured at a wavelength of 830 nm) may for example be achieved using a reflective layer of Ag. Plural reflective layers may be used instead of a single reflective layer, for example a system of dielectric reflective layers. The substrate may have a reflective surface, in particular in absence of a reflective layer arranged or coated thereon

Each of the one or more calibration reflectors may further comprise one or more of: a transparent protective layer, for example a glass cover, covering the reflective layer and/or the substrate thereof; a housing enclosing the calibration reflector at least in part; a fixation mechanism for fixating the respective calibration reflector, possibly at housing thereof; an air flow system for providing a cleaning air flow in a direction parallel to an external surface of the calibration reflector to receive the measurement beam, possibly to the reflective layer or to the protective layer; and a movable shutter configured to be selectively provided in an open configuration exposing the calibration reflector, in particular said external surface of the calibration reflector to receive the measurement beam, or in a closed configuration covering the calibration reflector, in particular said external surface of the calibration reflector to receive the measurement beam.

The one or more calibration reflectors, in particular each of them, have a constant spatial relation with respect to the work field and/or with respect to the at least one scanning unit. This implies that variations in a relative position of the one or more calibration reflectors with respect to the work field cannot and/or with respect to the at least one scanning unit cannot be due to relative positional variations of the one or more calibration reflectors and are hence due to other drift-generating factors. The constant spatial relation may correspond to a restriction of degrees of freedom of movement of the one or more calibration reflectors, for example in two or three dimensions, in particular with respect to the work field and/or with respect to the at least one scanning unit. In other words, the one or more calibration reflectors may have no mobility or restricted mobility with respect the work field and/or with respect to the at least one scanning unit, possibly limited to one or two degrees of freedom.

When the constant spatial relation of the one or more calibration reflectors is referred to the scanning unit, the skilled person understands that it may be referred to non-movable parts of the scanning unit and not to movable parts of the scanning unit.

In some embodiments, the constant spatial relation may be achieved by a fixed position of the one or more calibration reflectors with respect to the work field and/or with respect to the at least one scanning unit. Thus, at least some of the one or more calibration reflectors may be fixed with respect to the work field and/or with respect to the at least one scanning unit, for example by means of a corresponding rigid and/or mechanically stable attachment, possibly using the previously described fixation mechanism. For example, at least some of the one or more calibration reflectors may be rigidly attached to the work field. Although the work field can be thought of as a non-physical mathematical entity, in reality the work field is formed on a physical body to support the workpiece, for example on a surface or on a vertically shiftable platform of the laser processing apparatus and the skilled person will understand that the at least some of the one or more calibration reflectors may be rigidly attached to such surface or platform or to any other physical entity on which the work field may be defined.

In some embodiments, the laser processing apparatus may further comprise a frame, for example a housing, rigidly attached to the laser processing and to the measurement module and the constant spatial relation may be achieved by a fix position of the one or more calibration reflectors with respect to the frame. Thus, at least some of the one or more calibration reflectors may be fixed with respect to the frame, for example by means of a corresponding rigid and/or mechanically stable attachment. For example, at least some of the one or more calibration reflectors may be rigidly attached to the frame. The frame may be or comprise or be a part of or be attached to a housing of the laser processing apparatus, in particular of the laser processing module. If the frame has a constant or nearly-constant spatial relation with respect to the work field and/or with respect to the at least one scanning unit, the one or more retroreflectors that are fixed thereto may also be considered to have a constant or nearly-constant spatial relation with respect to the work field and/or with respect to the at least one scanning unit. This can be useful, at least at an approximative level, in some contexts, as explained in further detail below.

A variation of the path length of the measurement beam to and from the one or more calibration reflectors may be defined with respect to a previous value of the path length measured in each case for the same calibration reflector, for example for a previous time during use of the apparatus. Thanks to the constant spatial relation, such variation can be assumed to be due to drift, for which the variation of the path length measured using the measurement beam allows obtaining information about such drift.

An angular deflection setting of the scanning unit may refer herein to a setting of the corresponding at least one scanning unit deflecting the measurement beam. The angular deflection setting may correspond to an angle measured with reference to any reference angle or o-point angle, for example with reference to an angular setting of the corresponding scanning unit under which the measurement beam is directed vertically downwards, possibly to a central point of the work field. Thus, greater values of such angle may correspond to more peripheral regions of the work field, while smaller values of the angle may correspond to more central regions of the work field, arranged in a proximity of a region arranged vertically underneath the corresponding scanning unit.

The laser processing apparatus of the invention allows, thanks to the constant spatial relation of the one or more calibration reflectors with respect to the work field and/or with respect to the at least one scanning unit and thanks to the corresponding specific configuration of the processing unit, determining drift shifts based on distance variations measured using the measurement beam irrespectively of a cause thereof. Thus, advantageously, it is not required to know beforehand whether the drift shifts are being caused thermally, mechanically and/or electronically.

A further advantage of the present invention is that any existing laser processing apparatus, for example a pre-focusing three-axes apparatus or a two-axes system, possibly using an f-theta lens, can be easily configured according to the invention by incorporating the one or more calibration reflectors and a correspondingly configured processing unit.

In other embodiments, the constant spatial relation may be achieved by a limited mobility of the one or more calibration reflectors with respect to the work field and/or with respect to the frame. The constant spatial relation needs not imply a complete fixation or complete static configuration of the one or more calibration reflectors with respect to the work field. The one or more calibration reflectors may be movable with respect to the work field and/or with respect to the at least one scanning unit while keeping the constant spatial relation, for example movable with not more than one or not more than two degree(s) of freedom. For example, the one or more calibration reflectors may be rotatable, shiftable and/or displaceable with respect to the work field and/or with respect to the at least one scanning unit while keeping the constant spatial relation.

Accordingly, in some embodiments, the one or more calibration reflectors may comprise at least one movable calibration reflector that may be moved, in particular displaced, to different positions with respect to the work field and/or with respect to the at least one scanning unit while keeping the constant spatial relation. When moving to said different relative positions, for example by pivoting or sliding, the at least one movable calibration reflector may change position with respect to the work field but keeps the constant spatial relation, which possibly corresponds to a limitation in the mobility (the degrees of freedom) of the one or more calibration reflectors. In such cases, the processing unit may be configured for determining drift shifts of the laser processing apparatus based on variations of a path length of the measurement beam to and from said different positions of the movable calibration reflector and on corresponding angular deflection setting of the scanning unit.

In some embodiments, the laser processing apparatus may comprise at least one fixed one-dimensional guide element, fixedly arranged with respect to the work field, with the at least one movable calibration reflector being movable or slidable along the at least one-dimensional guide element. By restricting a movement of the at least one movable calibration reflector to one dimension, the at least one guide element preserves the constant spatial relation, which may be defined by the two dimensions or directions in which the at least one movable calibration reflector is not movable. The at least one fixed one-dimensional guide element may have one or more retention positions at which a corresponding calibration reflector may be removably locked.

In other related embodiments, the laser processing apparatus may comprise at least one pivoting element, pivotably arranged with respect to the work field, with the at least one movable calibration reflector being movable or pivotable together with the at least one pivoting element, which may for example comprise a pivoting arm to which a pivotable calibration reflector may be attached by restricting a movement of the at least one movable calibration reflector to one pivoting dimension, the at least one pivoting element preserves the constant spatial relation, which may be defined by the two dimensions or directions in which the at least one movable calibration reflector is not movable and/or by a fixed length of the pivoting arm. The at least one pivoting element may have one or more retention positions at which a corresponding calibration reflector may be removably locked.

In preferred embodiments, the processing unit may be configured for calibrating the laser processing module based on the determined drift shifts, possibly cyclically and/or at predefined intervals. Thereby, the determined drift shifts may be taken into account and used to (re)calibrate the laser processing module, to compensate the determined drift shifts and regain accuracy. The implementational details of such calibration process are known to the skilled person.

The one or more calibration reflectors may comprise two or more calibration reflectors and the processing unit may be configured for controlling the scanning unit to direct the measurement beam to different calibration reflectors of the two or more calibration reflectors, possibly sequentially and/or one after the other, and for determining said drift shifts as a function of the drift shifts determined for each of the two or more calibration reflectors. The function may for example be an average or median function. By relying on such a function of two or more calibration reflectors, errors or inaccuracies linked to a specific calibration reflector can be statistically suppressed.

In preferred embodiments, the one or more calibration reflectors may comprise an even number of calibration reflectors pairwise arranged in front of each other on opposite sides of the work field. Preferably, the calibration reflectors may be pairwise arranged in front of each other on an axis of symmetry of the work field. By being arranged this way, the one or more calibration reflectors may allow identifying a vertical component of a drift shift, which will be equal or similar in calibration reflectors arranged in front of each other, and/or identifying a horizontal component of a drift shift, which will be different or opposed in calibration reflectors arranged in front of each other.

The laser processing module may comprise an optical element for reflecting one of the work beam and the measurement beam and for transmitting therethrough the other one of the work beam and the measurement beam. The optical element may be configured for reflecting light in a wavelength range corresponding to the work beam and for transmitting light in a wavelength range corresponding to the measurement beam. Alternatively, the optical element may be configured for transmitting light in a wavelength range corresponding to the work beam and for reflecting light in a wavelength range corresponding to the measurement beam. The optical element may for example comprise a dichroic element, such as a dichroic filter.

The measurement beam may correspond to light in the infrared part of the spectrum, in particular with wavelengths within the range of 700 nm to 1400 nm, preferably from 800 nm to 1000 nm, more preferably from 815 nm to 850 nm, for example 830 nm. The work beam may correspond to light in a wavelength range different from, possibly bigger or smaller than, the wavelength range corresponding to the measurement beam. Thus, the optical element of the laser processing module may be transmissive for a part of the spectrum, in particular of the infrared spectrum, while being reflective for the rest of the spectrum or at least for a part thereof. As a result, the measurement beam and the work beam may propagate separately on one side of the optical element, before being reflected at or transmitted through the optical element, while they may propagate along the same optical path on the other side of the optical element, after being reflected at or transmitted through the optical element.

According to preferred embodiments, at least one, preferably at least two, of the one or more calibration reflectors may comprise a stepped reflection surface. In such calibration reflectors, a surface at which the measurement beam is to be reflected, rather than being homogeneous and/or flat, may have a series of abrupt (step-like) profile variations between adjacent steps. For example, a cross-section of such calibration reflectors in a plane perpendicular to the stepped reflection surface may comprise a plurality of steps. Each of the steps of the stepped reflection surface, which may form a plateau of constant height and/or depth, may preferably have an extension equal to or smaller than a spot size of the measurement beam, the spot size of the measurement beam corresponding to a beam width or beam diameter of the measurement beam on the work field and/or on a corresponding calibration reflector. Preferably, said extension of constant height/depth of the steps may be smaller than half the beam width or beam diameter of the beam width. For example, if the beam width or beam diameter of the measurement beam on the work field and/or on a corresponding calibration reflector is of 150 µm, the steps of the stepped reflection surfaces of said at least one of the calibration reflectors may have an extension of constant height and/or depth of up to 150 µm, for example of 100 µm or less, preferably of 75 µm or less. As a further example, if the beam width or beam diameter of the measurement beam on the work field and/or on a corresponding calibration reflector is of 50 µm, the steps of the stepped reflection surfaces of said at least one of the calibration reflectors may have an extension of constant height and/or depth of up to 50 µm, for example of 40 µm or less, preferably of 25 µm or less.

As a result, the measurement beam, when directed to the at least one calibration reflection comprising a stepped reflection surface, may by reflected at more than one step, possibly at two neighboring steps. Consequently, a reflection spectrum of the measurement beam may then display two peaks rather than one peak, wherein the height of each of the two peaks may be proportional to a portion of the spot size of the measurement beam being reflected by each one of the two neighboring steps. For example, the reflection spectrum will have two peaks of approximately same height when approximately a half of the spot size of the measurement beam is reflected by each of the two neighboring steps. If compared to a reflection spectrum of a previous measurement using the measurement beam, the variation of the reflection spectrum may allow inferring a type of drift shift causing such variation. This may be particularly useful when the first shift is caused by a relative rotation or tilt of the work field and the at least one scanning unit, which would otherwise correspond to measured variations of the path length of the measurement beam to and from the calibration reflectors equal to zero.

A second aspect of the invention refers to a method of determining a drift shift in a laser processing apparatus. The laser processing apparatus, which may possibly be a laser processing apparatus according to the first aspect of the invention, comprises a scanning unit for scanning a laser beam over a work field and one or more calibration reflectors having a constant spatial relation with respect to the work field and/or with respect to the at least one scanning unit. Said laser beam may in particular correspond to the working laser beam and/or to the measurement beam of a laser processing apparatus according to the first aspect of the invention.

The method comprises performing distance measurements with a measurement beam directed by the scanning unit to each of the one or more calibration reflectors to determine, for each of the one or more calibration reflectors, one or more corresponding variations of a path length of the measurement beam. The distance measurements may be performed interferometrically, for example using the measurement module described in EP 4 296 612 A1. The variation of the path length may be defined with respect to respective previous distance measurements, for example performed at an earlier time during operation, i.e. during execution of the method.

The method further comprises detecting, for each of the one or more calibration reflectors, one or more corresponding angular deflection settings of the scanning unit. Thus, a corresponding angular setting of the scanning unit is associated to each calibration reflector and each corresponding distance measurement. For example, each calibration reflector and each corresponding distance measurement may be associated with a corresponding angular value required by the scanning unit for directing the measurement beam to the corresponding calibration reflector, each angular value possibly indicating an angular deviation from a reference angular or o-angle at which the measurement beam may be directed vertically downwards towards the work field.

The method further comprises determining a drift shift based on said one or more corresponding variations of a path length of the measurement beam and on said one or more corresponding angular deflection settings of the scanning unit.

The one or more calibration reflectors may comprise two or more calibration reflectors and the method may then further comprise using the scanning unit to direct the laser beam to each of the two or more calibration reflectors, possibly sequentially or one after the other, corresponding in each case to a respective angular deflection setting of the scanning unit. Said interferometric measurements may be performed to determine, for each of the two or more calibration reflectors, two or more corresponding variations of a path length of the measurement beam. Then, for each of the two or more calibration reflectors, the two or more respective angular deflection settings of the scanning unit may be detected. Then, for each of the two or more calibration reflectors, a partial drift shift may be determined based on said two or more corresponding variations of the path length of the measurement beam and on said two or more corresponding angular deflection settings of the scanning unit. Said drift shift may then be determined as a function of the partial drift shifts, wherein said function may preferably be an average or median function.

If the laser processing apparatus comprises at least one movable calibration reflector as described above for the first aspect of the invention, the method may further comprise: moving the at least one movable calibration reflector to different positions with respect to the work field; using the scanning unit to direct the measurement beam to each of the different positions of the at least one movable calibration reflector, corresponding in each case to a respective angular deflection setting of the scanning unit; performing said interferometric measurements to determine, for each of the different positions of the at least one movable calibration reflector, corresponding variations of a path length of the measurement beam; detecting, for each of the different positions of the at least one movable calibration reflector, respective angular deflection settings of the scanning unit; determining, for each of the different positions of the at least one movable calibration reflector, a partial drift shift based on said corresponding variations of the path length of the measurement beam and on said corresponding angular deflection settings of the scanning unit; and determining said drift shift as a function of the partial drift shifts, wherein said function preferably is an average or median function.

The drift shift may be determined trigonometrically. For example, in some embodiments, a drift shift may be determined as a vertical drift ΔZ corresponding to ΔZ = ΔL / cos α, wherein ΔL is a variation of the path length of the measurement beam and α is an angular deflection setting of the scanning unit corresponding to an angle of the laser beam with respect to a vertical direction. A vertical drift ΔZ = ΔL / cos α may correlate with a corresponding horizontal drift ΔY = ΔL · sin α / (cos α)², having opposite signs for horizontal drifts measured for calibration reflectors arranged on opposed sides of the work field, possibly in front of each other. Additionally or alternatively, a drift shift may be determined as a horizontal drift ΔY corresponding to ΔY = ΔL / sin α, having equal signs for horizontal drifts measured for calibration reflectors arranged on opposed sides of the work field, possibly in front of each other.

In some embodiments, the laser processing apparatus may comprise at least one calibration reflector with a stepped reflection surface, as previously described. The at least one calibration reflector may be or comprise at least two of the calibration reflectors, each with a stepped reflection surface, which may possibly be arranged in front of each other on opposite sides of the work field. The method may then comprise using the scanning unit to direct the measurement beam to each of said at least two calibration reflectors with stepped reflection surfaces, detecting a variation in a reflection spectrum of the measurement beam for each of said at least two calibration reflectors, and determining said drift shift based on the detected at least two variations of the reflection spectrum, in particular on a comparison thereof.

As previously explained, each of the steps of the stepped reflection surface of the at least one calibration reflector may form a plateau of constant height and/or depth preferably having an extension smaller than a spot size of the measurement beam, the spot size of the measurement beam corresponding to a beam width or beam diameter of the measurement beam on the work field and/or on a corresponding calibration reflector. For example, the steps of the stepped reflection surfaces of said at least one of the calibration reflectors may have an extension of constant height and/or depth of up to 150 µm, while beam width or beam diameter of the measurement beam on the calibration reflectors may be of 200 µm or more. The method may then comprise advancing/sweeping the measurement beam on the work beam by sampling steps corresponding to a distance shift less than said beam width or beam diameter of the measurement beam on the work field, thereby generating some oversampling, for example a 2x, 3x, 4x, 5x or 6x oversampling. The scanning direction in which the measurement beam advances may be parallel to a direction in which said extension of the steps smaller than the spot size of the measurement beam extends or is measured.

If, for example, for two calibration reflectors, each with a stepped reflection surface, respective variations of a reflection spectrum are measured, one of them comprising a smaller reflection peak and a greater reflection peak, the smaller reflection peak being arranged to the left and to the right of the greater reflection peak, respectively, or the other way around, the conclusion may be extracted that the drift shift is due to tilt or rotation of the work field with respect to the laser processing apparatus. Notably, such drift shift due to tilt can be detected even when the same path length of the measurement beam is measured for each of said two calibration reflectors arranged in front of each other on opposite sides of the work field, each with a stepped reflection surface. A further aspect of the invention refers to a possibly computer-implemented method of compensating drift shifts in a laser processing apparatus, which may be a laser processing apparatus according to the first aspect of the invention, comprising determining a drift shift according to the method of the second aspect of the invention and adjusting the laser processing apparatus to compensate said drift shift. This method may be implemented by a generic processing unit and/or by the processing unit of the laser processing apparatus of the first aspect of the invention.

### BRIEF DESCRIPTION OF THE DRAWINGS

- Fig. 1: shows a schematic view of a laser processing apparatus according to some embodiments of the invention, wherein calibration reflectors are attached to the work field.
- Fig. 2: shows a schematic top view of the work field of the laser processing apparatus of Fig. 1.
- Fig. 3: shows a schematic view of the structure of a calibration reflector according to some embodiments of the invention.
- Fig. 4: shows a flow diagram of a method according to the invention.
- Fig. 5: schematically illustrates a trigonometric determination of a vertical drift shift according to the invention.
- Fig. 6: illustrates the trigonometric determination of Fig. 5 superimposed on a calibration reflector.
- Fig. 7: schematically illustrates a trigonometric determination of a horizontal drift shift according to the invention.
- Fig. 8: illustrates the trigonometric determination of Fig. 7 superimposed on a calibration reflector.
- Fig. 9: schematically illustrates a tilt drift shift.
- Fig. 10: a schematic view of a calibration reflector with a stepped reflection surface according to embodiments of the invention.
- Fig. 11: schematically illustrates and compares different situations in which a reflection spectrum of a measurement beam reflected at a stepped calibration reflector may be measured.
- Fig. 12: schematically illustrates the determination of a tilt drift by comparing reflection spectra according to embodiments of the invention.
- Fig. 13: shows a schematic view of a laser processing apparatus according to some embodiments of the invention, wherein calibration reflectors are attached to a frame.
- Fig. 14: shows a schematic view of a laser processing apparatus according to some embodiments of the invention, including a movable calibration reflector.

### DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

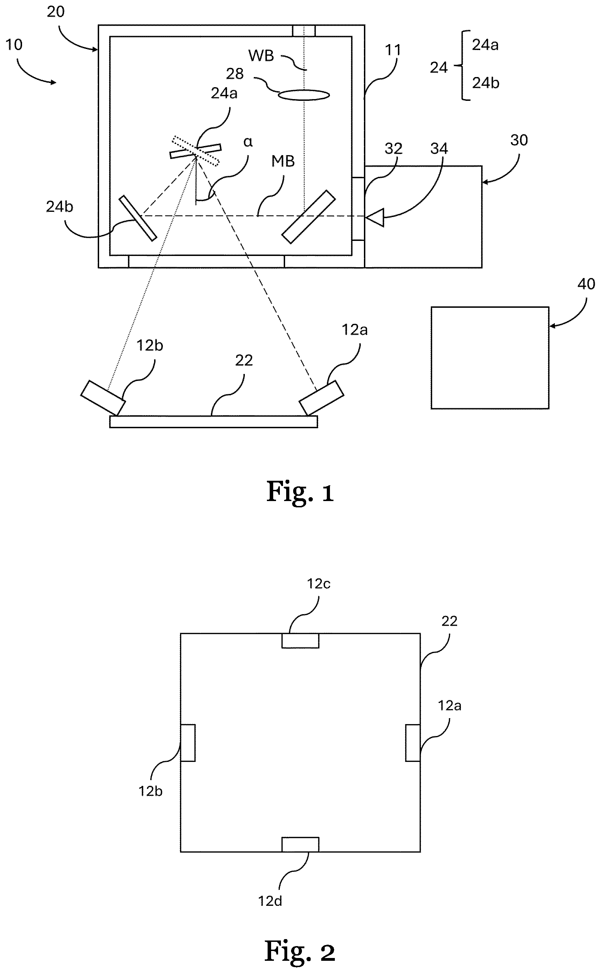

The same reference signs are used in Figs. 1-14 for indicating the same elements.

Fig. 1 shows a schematic view of a laser processing apparatus 10 according to the invention. The laser processing apparatus 10 comprises a laser processing module 20 and a measurement module 30. The laser processing module 20 is configured for laser processing a workpiece on a work field 22 using a work beam WB. The measurement module 30 is configured for performing distance measurements using a measurement beam MB. The measurement module 30 can be connectable or comprise an interferometer configured for interferometrically performing the distance measurements. For example, the measurement module 30 can be a measurement module as described in EP 4 296 612 A1. The measurement module 30 is optically coupled with the laser processing module 20 through a coupling port 32 to receive and output the measurement beam MB from and to the laser processing module 20, which is schematically indicated by reference sign 34. The coupling port 32 can be formed through a housing of the measurement module 30 and through a housing 11 of the laser processing module 20.

The laser processing module 20 includes a scanning unit 24, which is configured for scanning the work beam WB and the measurement beam MB over the work field 22, and an optional focusing unit 28 for focusing the work beam WB. The focusing unit 28 can comprise one or more movable lenses and one or more fixed lenses. The scanning unit 28 comprises a pair of XY rotatable mirrors 24a and 24b, each configured for determining a deflection direction the measurement beam MB or the work beam WB in a corresponding direction of an XY-plane parallel to the planar work field 22.

The laser processing apparatus 10 further comprises calibration reflectors 12a, 12b. In the exemplary embodiment shown, two calibration reflectors 12a and 12b are shown, although the number of reflectors can be one or larger than two in other related embodiments.

Fig. 2 shows a schematic top view of the work field 22 of the laser processing apparatus 10 of Fig. 1 according to a related embodiment, in which four calibration reflectors 12a, 12b, 12c and 12d are included, which are pairwise arranged in front of each other on opposite sides of the work field 22, on a respective axis of symmetry thereof. The calibration reflectors 12a and 12b, which can correspond to the calibration reflectors 12a and 12b shown in Fig. 1, are arranged in front of each other on a first axis of symmetry of the square work field 22 and the calibration reflectors 12c and 12d are arranged in front of each other on a second axis of symmetry of the square work field 22. The shape of the work field 22 needs not be square and may be different, possibly non-polygonal and/or non-symmetric in other related embodiments.

The calibration reflectors 12a and 12b (and possibly any other calibration reflectors, if present) have a constant spatial relation with respect to the work field 22 and with respect to the scanning unit 24. In the exemplary embodiment of Fig. 1, the constant spatial relation is implemented by the calibration reflectors 12a and 12b being fixed with respect to the work field 22 by being correspondingly attached thereto rigidly. The work field 22 can correspond to a vertically shiftable platform on which a workpiece being laser processed is supported and the calibration reflectors 12a and 12b can be rigidly attached thereto.

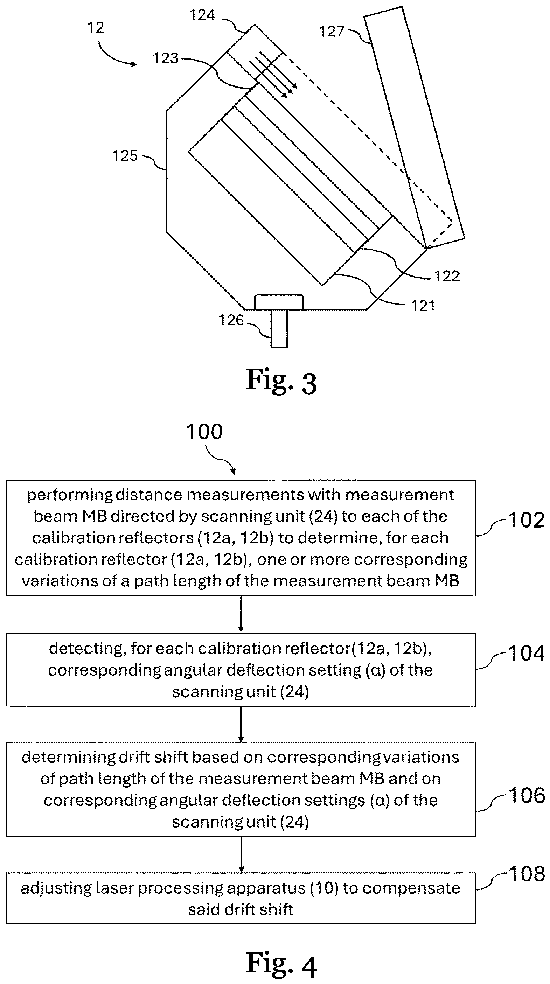

Fig. 3 shows a schematic view of an exemplary structure of each of the calibration reflectors according to some embodiments of the invention. In Fig. 3, a generic calibration reflector is indicated as 12, which can correspond to any of the calibration reflectors 12a and 12b (and 12c and 12d) of Figs. 1 and 2. According to this embodiment, a calibration reflector 12 can comprise a substrate 121 optionally coated with a reflective layer 122. The substrate 121 can comprise any of SiO2, Al2O3 and/or SiC and the reflective layer 122 coated on the substrate 121 can comprise a metallic material, for example any of Au, Al, Ag.

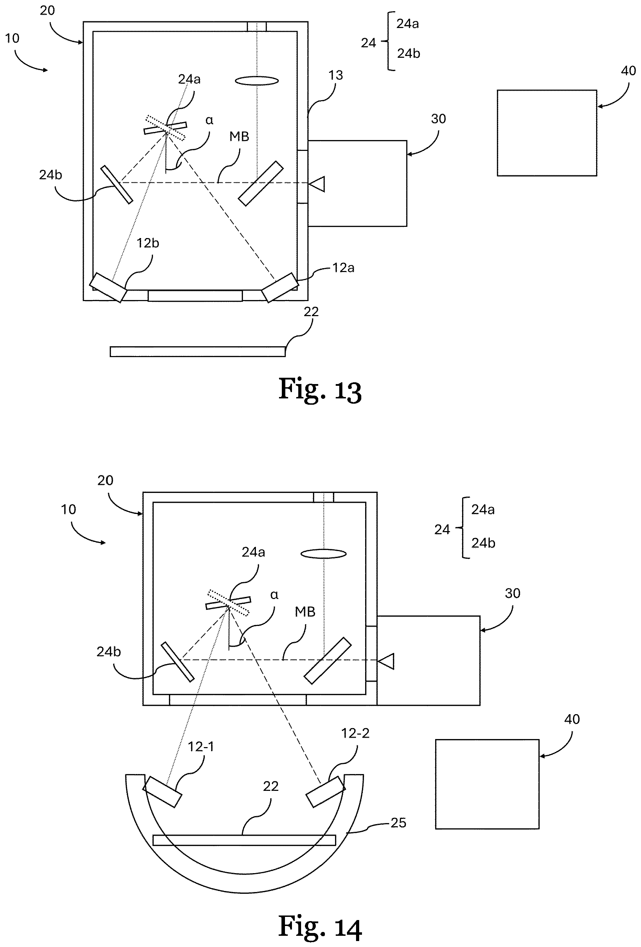

The exemplary calibration reflector 12 of Fig. 3 further comprises a transparent protective layer 123, which can for example be configured as a glass cover, configured for covering and protecting the reflective layer 122 and the substrate 121, and a housing 125 that encloses the calibration reflector while exposing the reflective layer 122 through the protective layer 123. The calibration reflector 12 further comprises a fixation mechanism 126 for fixating the calibration reflector 12, in particular the housing 125. Using the fixation mechanism 126, the calibration reflector 12 can be fixated to the work field 22, to a frame 13 (see Fig. 13) or to a guide-element 25 (see Fig. 14).

The exemplary calibration reflector 12 of Fig. 3 further comprises an optional air flow system 124 for providing a cleaning air flow (indicated by three parallel straight arrows in Fig. 3) in a direction parallel to an external surface of the calibration reflector 12 that receives a measurement beam, which in this case is the optional protective layer 123.

The exemplary calibration reflector 12 of Fig. 3 further includes an optional movable shutter 127 configured to be selectively provided in an open configuration (shown in full lines) exposing the protective layer 123 of the calibration reflector 12 or in a closed configuration (shown in dashed lines) covering the protective layer 123 of the calibration reflector 12.

The laser processing apparatus 10 of Fig. 1 further comprises a processing unit 40, which can be an internal processing unit, such as a CPU or a control card, or an external processing unit, such as a generic computer or another control device, remotely connected to the other components of the laser processing apparatus 10. The processing unit 40 is configured for determining drift shifts of the laser processing apparatus by performing a method 100 that is schematically illustrated, as a flow diagram, in Fig. 4.

Method 100 begins with process 102, in which the processing unit 40 performs, using the measurement module 30, distance measurements with the measurement beam MB, which is directed by the scanning unit 24 to each of the calibration reflectors 12a and 12b, for example sequentially, one after the other, e.g. first calibration reflector 12a and then calibration reflector 12b and then possibly any subsequent calibration reflector, for example the additional calibration reflectors 12c and 12d shown in Fig. 2. For each calibration reflector, a corresponding variation ΔL of a path length of the measurement beam MB is determined, which can be defined with respect to a predetermined setting or to a previous measurement.

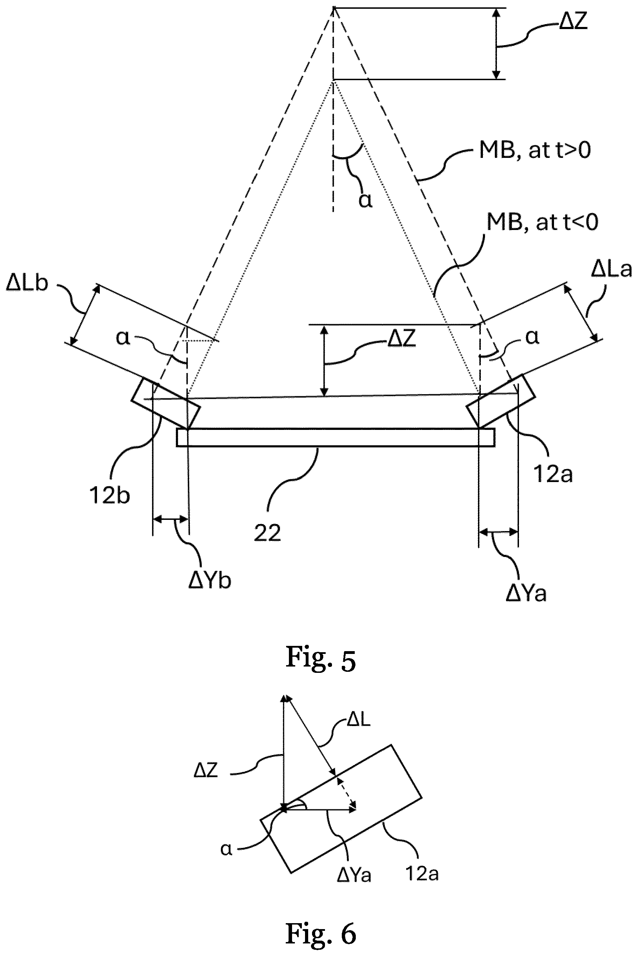

Fig. 5 schematically illustrates the trigonometric measuring of a variation ΔL of a path length of the measurement beam MB in the presence of a vertical drift shift ΔZ, which can correspond to a variation in a vertical distance between the scanning unit 24 of the laser processing apparatus 10 and the work field 22, for example due to thermal fluctuations. The dotted line indicates the measurement beam MB for a previous measurement at a time t<0, whereas the dashed line indicates the measurement beam MB at a posterior time t>0. The skilled person understands that the measurements corresponding to calibration reflector 12a and the measurements corresponding to calibration reflector 12b are not necessarily taken simultaneously.

Method 100 also includes process 104, in which the processing unit 40 detects, for each calibration reflector 12a and 12b, a corresponding angular deflection setting α, corresponding to an angle of the measurement beam MB with respect to the vertical direction.

Processes 102 and 104 can be performed one after the other, in any order, or simultaneously, such that the variation ΔL of a path length of the measurement beam MB and the angular deflection setting α are first measured for a first calibration reflector 12a to which the measurement beam MB is directed, then for a second calibration reflector 12b to which the measurement beam MB is subsequently directed, and so on.

The measured variation ΔL of a path length of the measurement beam MB and the determined angular deflection setting α are used in a subsequent process 106 for determining a drift shift based thereon.

Fig. 6 illustrates the trigonometric relations of Fig. 5 superimposed on the calibration reflector 12a. By trigonometric considerations, one has (assuming negative values to the left and positive values to the right in Fig. 5): $ΔYa = \frac{sin α}{{\left(cos α\right)}^{2}} ΔLa = - ΔYb = \frac{sin α}{{\left(cos α\right)}^{2}} ΔLb ,$ and $Δ Z = \frac{ΔL}{cos α}$

Thus, for example, for an angular deflection setting of the scanning unit 24 α = 20° and a measured variation of the path length of the measurement beam MB ΔL = 10 µm, it is possible to obtain ΔZ ≈ 11 µm and ΔYa=ΔYb = 4 µm. Thus, it is possible to obtain both ΔZ and ΔY. Notably, in the situation illustrated in Figs. 4 and 5, ΔL and ΔZ are equal for both calibration reflectors 12a and 12b. Further, the horizontal drift ΔY, which is indicated in Fig. 4 as ΔYa for the calibration reflector 12a and as ΔYb for the calibration reflector 12b, has the same absolute value but different sign for the calibration reflectors 12a and 12b if the calibration reflectors 12a and 12b are arranged on opposite sides of the work field 22, in front of each other, for example as shown in Fig. 2. The different sign indicates that the drift shifts ΔYa are in opposite ΔYb directions (from left to right in the case of ΔYa and from right to left for ΔYb in Fig. 4). Thus, the relations shown in Fig. 6 can apply both to the calibration reflector 12a and to the calibration reflector 12b.

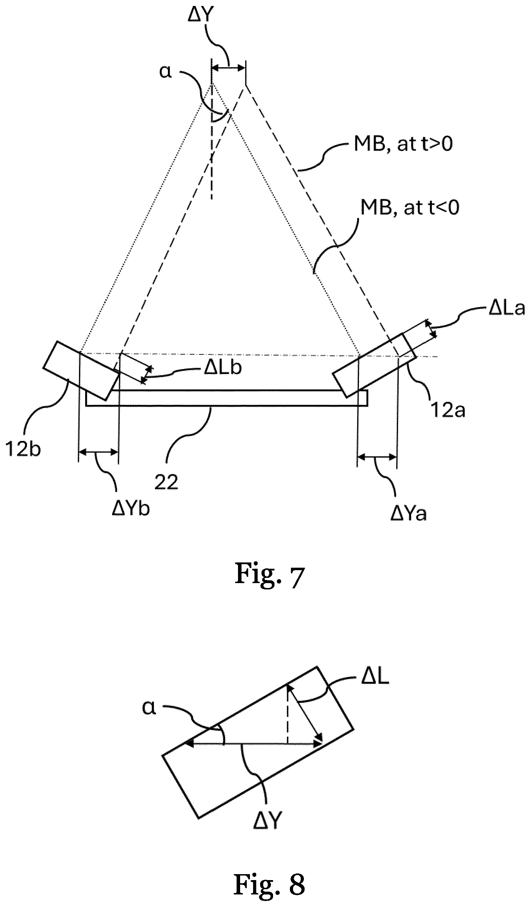

Fig. 7 and 8 are analogous to Figs. 5 and 6 for a horizontal drift ΔY. In this case, the horizontal drift ΔY, which is indicated in Fig. 7 as ΔYa for the calibration reflector 12a and as ΔYb for the calibration reflector 12b, has the same absolute value and the same sign for the calibration reflectors 12a and 12b if the calibration reflectors 12a and 12b are arranged on opposite sides of the work field 22, in front of each other, for example as shown in Fig. 2, since both drift shifts are in the same direction in Fig. 7 (from left to right). In this case, trigonometric considerations lead to $Δ Y = ΔL / \left(sin α\right) = ΔYa = ΔYb .$

Thus, for example, for an angular deflection setting of the scanning unit 24 α = 20° and a measured variation of the path length of the measurement beam MB ΔL = 10 µm, it is possible to obtain ΔY ≈30 µm. Notably, in the situation illustrated in Figs. 7 and 8, ΔY has different signs (positive or negative) for calibration reflectors 12a and 12b, if arranged on opposite sides of the work field 22, in front of each other, for example as shown in Fig. 2.

Such trigonometric relations can be used in step 106 to obtain the drift shifts ΔY and/or ΔZ based on the measured variation ΔL of a path length of the measurement beam MB and on the determined angular deflection setting α.

In either case, the processing unit 40 can use the determined drift shift ΔY and/or ΔZ in process 108 to adjust the laser processing apparatus 10 to compensate the drift shift ΔY and/or ΔZ. For example, a horizontal drift shift may be compensated by recalibrating the scanning unit 24 and, then, a vertical drift shift ΔZ may be compensated by recalibrating the focusing unit 28.

In the process illustrated with Figs. 5 and 6, the drift shift ΔZ can be determined once for calibration reflector 12a and once for calibration reflector 12b and a function of both results (both partial drift shifts), for example an average thereof, can be considered as the drift shift ΔZ used by the processing unit 40 to adjust the laser processing apparatus 10, for example by correspondingly recalibrating the focusing unit 28. This can be adapted to a number of calibration reflectors greater than two.

Likewise, in the process illustrated with Figs. 7 and 8, the drift shift ΔY can be determined once for calibration reflector 12a and once for calibration reflector 12b and a function of both results (both partial drift shifts), for example an average thereof, can be considered as the drift shift ΔY used by the processing unit 40 to adjust the laser processing apparatus 10, for example by recalibrating the scanning unit 24. This can be adapted to a number of calibration reflectors greater than two.

Notably, it is possible, within the context of the invention, to tell a horizontal drift shift ΔY from a vertical drift shift ΔZ by comparing the corresponding variation ΔL of the path length of the measurement beam MB for the calibration reflectors 12a and 12b. Since the calibration reflectors 12a and 12b are arranged in front of each other on opposite sides of the work field 22, a horizontal drift shift ΔY (corresponding to Figs. 7 and 8) will be different from a vertical drift shift ΔZ (corresponding to Figs. 5 and 6) in that a vertical drift shift ΔZ is associated to a horizontal shift ΔY having different sign for the calibration reflectors 12a and 12b (i.e. ΔYa=-ΔYb, see. Figs. 5 and 6), while a horizontal drift shift ΔY will have equal signs for both calibration reflectors 12a and 12b (i.e. ΔYa = ΔYb, see Figs. 7 and 8). Further, in the case of a horizontal drift shift ΔY (corresponding to Figs. 7 and 8), the variation of the path length ΔL of the measurement beam MB has different signs for the calibration reflectors 12a and 12b, i.e. ΔLa=-ΔLb, while in the case of a vertical drift shift ΔZ (corresponding to Figs. 5 and 6), the variation of the path length ΔL of the measurement beam MB has the same sign for the calibration reflectors 12a and 12b, i.e. ΔLa=ΔLb. Thus, the processing unit 40 can be configured to detect whether there is a net vertical drift, as in Figs. 5 and 6, or a net horizontal drift, as in Figs. 7 and 8, for example based on whether the measurements with the measurement beam MB reveal ΔYa= ΔYb or ΔYa=- ΔYb and/or based on whether measurements with the measurement beam MB reveal ΔLa= ΔLb or ΔLa=- ΔLb.

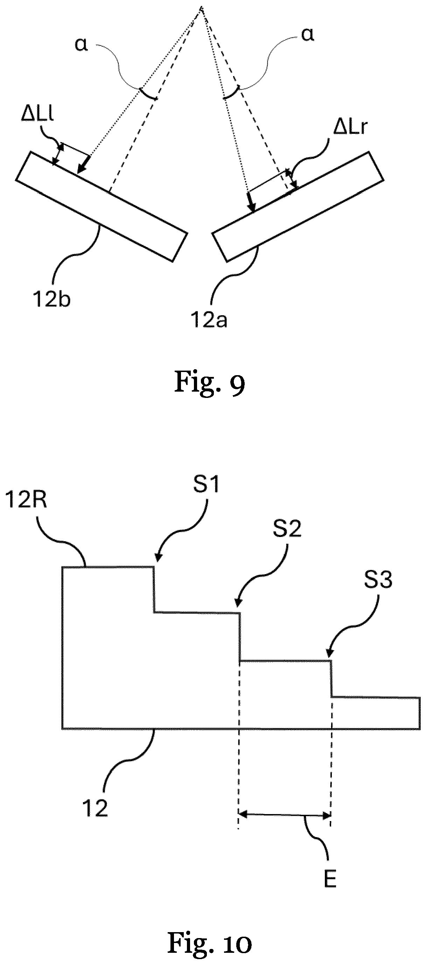

Fig. 9 illustrates a trigonometric situation that can arise when drift is due to a tilt or rotation of the calibration reflectors 12a and 12b with respect to the laser processing apparatus 10. In Fig. 9, measures using the measurement beam at a time t<o are shown using a dashed line with shorter dashes and measures using the measurement beam at a time t>0 are shown using a dashed line with longer dashes. Due to the aforementioned tilt or rotation, the positions of the measurement beam MB for measurement are rotated at t>0 with respect to the positions of the measurement beam MB for measurement at t<0. Notably, for this type of drift, both the horizontal drifts and the variation of the path length of the measurement beam MB measured for the calibration reflectors 12a and 12b are equal, i.e. ΔYa= ΔYb and ΔLa= ΔLb. Accordingly, the processing unit 40 could not be able to identify this situation as corresponding to either one of vertical drift (possibly requiring ΔYa= -ΔYb and ΔLa= ΔLb) or horizontal drift (possibly requing ΔYa= ΔYb and ΔLa= -ΔLb). This can be solved by using calibration reflectors comprising a stepped reflection surface.

Fig. 10 shows an example of a calibration reflector 12 comprising a stepped reflection surface 12R. The stepped reflection surface 12R can correspond to the reflection surface of the substrate 121 and/or of the reflective layer 122 of Fig. 3. The stepped reflection surface 12R has three (step-like) profile variations S1, S2 and S3 between adjacent steps. Each of the steps of the stepped reflection surface forms a plateau of constant height and/or depth and has an extension E.

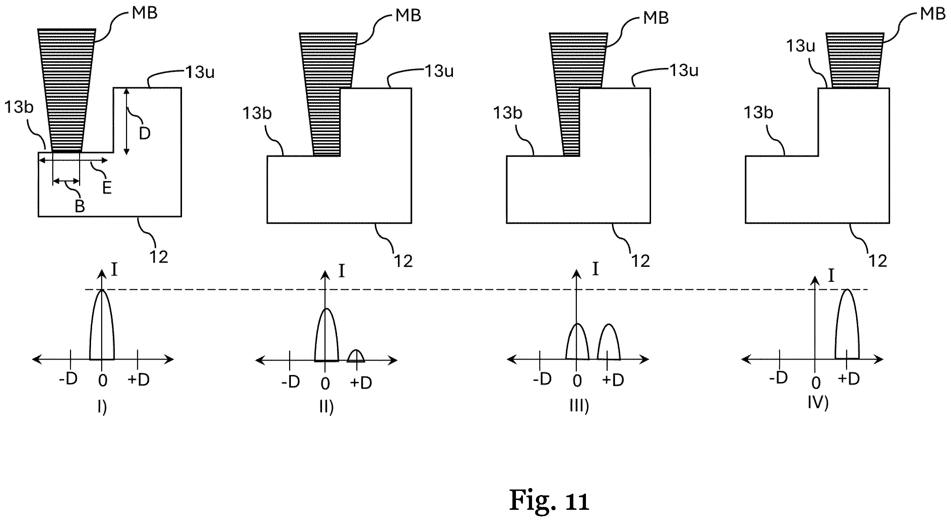

Fig. 11 shows four different situations, I), to IV), of how the reflection of the measurement beam MB at a calibration reflector with a stepped reflection surface can affect a measured reflection spectrum of the measurement beam.

Block I) of Fig. 11 (left-most), shows, in the bottom part, a schematic reflection spectrum, which can possibly be a OCT-spectrum, measured as a signal intensity (vertical axis) over a spatial coordinate (horizontal axis) corresponding to a distance difference with respect to a reference, e.g. a so-called OCT-distance or OCT-depth. In Fig. 11, the measurement in I) is used as a reference for II), III) and IV), for which the intensity peak in I) is found at a zero-distance, since the measurement beam MB is totally reflected at a lower step surface 13b of the calibration reflector 12, with no part of the measurement beam MB being reflected at an upper step surface 13u of the calibration reflector 12.

The steps 13u and 13b of the calibration reflector 12, which is assumed to be the same also in Blocks II), III) and IV) of Fig. 11, are shown to have an extension E of constant height/depth, which is exaggerated in Fig. 11 for illustration purposes but is preferably equal to or smaller than the beam diameter B, more preferably smaller than half the beam diameter, or smaller than one third of the beam diameter or smaller than one fourth of the beam diameter. The beam diameter B of the measurement beam MB is also assumed to be the same for all blocks I), II), III) and IV).

Block II) of Fig. 11 (second from the left), shows, in the bottom part, a schematic reflection spectrum corresponding to the situation illustrated in the upper part of block II), wherein the measurement beam MB is mostly reflected at the lower step surface 13b of the calibration reflector 12 but also partly reflected at the upper step surface 13u of the calibration reflector 12. In the schematic reflection spectrum of Block II), a primary (greater) peak remains at a distance 0 and a secondary (smaller) peak appears at distance +D, corresponding to the part of the measurement beam MB being reflected at the upper step surface 13u, which is a distance D shorter compared to the reference. The different heights of the peaks correspond to the difference in the part of the measurement beam MB being reflected at the bottom step surface 13b (greater) and at the upper step surface 13u (smaller).

Block III) of Fig. 11 (second from the right), shows, in the bottom part, a schematic reflection spectrum corresponding to the situation illustrated in the upper part of block III), wherein about half of the measurement beam MB is reflected at the lower step surface 13b and about half of the measurement beam MB is reflected at the upper step surface 13u. Accordingly, two peaks of about the same height are seen in the schematic reflection spectrum, at distances o and +D.

Block IV) of Fig. 11 (right-most), shows a situation in which the measurement beam MB is totally reflected at the upper step surface 13u of the calibration reflector 12, with no part of the measurement beam MB being reflected at the bottom step surface 13b of the calibration reflector 12. Accordingly, the schematic reflection spectrum shown in the bottom part of Block IV) reveals a single peak, with the same height as the reflection spectrum of Block I) but at a different position, +D, on the horizontal axis.

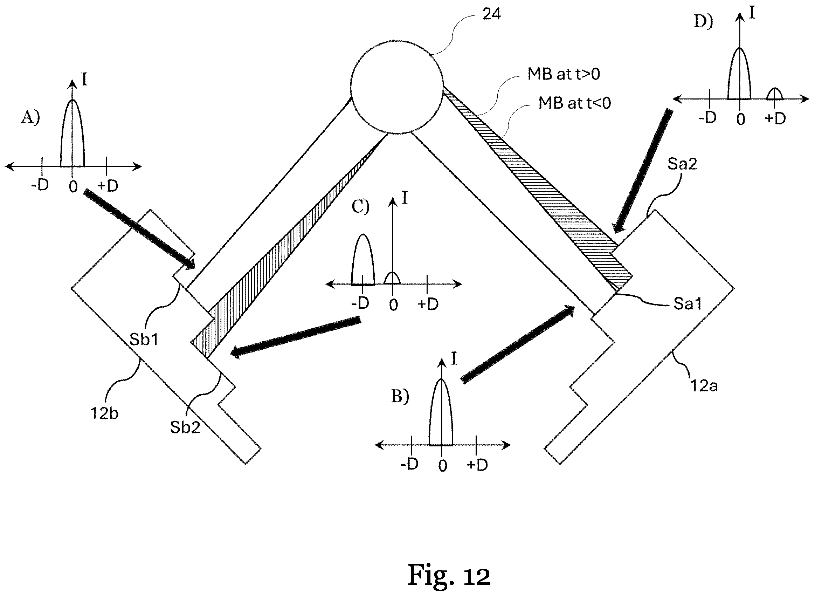

Fig. 12 illustrates the determination of a tilt drift by comparing reflection spectra measured at calibration reflector 12 (for example, calibration reflector 12a or 12b) with stepped reflection surfaces according to embodiments of the invention, applying the principles illustrated in Fig. 11.

A position of the scanning unit 24 of the laser processing apparatus 10 is schematically indicated in Fig. 12, wherein the measurements taken with the measurement beam MB (shown in white, with no filling) at a reference measurement time t<0 are compared to measurements taken with the measurement beam MB (with structured filling) at later measurement times t>0. At the time t<o, a reflection spectrum A) with a single peak is measured at distance 0 for the reflection of the measurement beam MB at calibration reflector 12b, wherein the measurement beam MB is totally reflected at step surface Sb1 of the calibration reflector 12b and a reflection spectrum B) with a single peak is measured, also at distance 0, for the reflection of the measurement beam MB at calibration reflector 12a, wherein the measurement beam MB is totally reflected at step surface Sa1 of the calibration reflector 12a.

A tilt or rotation produces drift between measurement times t<o and t>0 illustrated in Fig. 12. As a consequence, the measurement beam MB, when reflected at calibration reflector 12b, is now partly reflected at step surface Sb1 and partly (mostly) reflected at step surface Sb2, producing a reflection spectrum C) with two peaks, a greater peak being on the left-hand side at distance -D and a smaller peak remaining at distance 0. Further, the measurement beam MB, when reflected at calibration reflector 12a, is now partly reflected at step surface Sa1 but also mostly reflected at step surface Sa2 (like 12b), producing a reflection spectrum D) with two peaks, a greater peak being on the left-hand side, at distance 0, and a smaller peak being on the right-hand side, at distance +D.

The processing unit 40 can be able to correctly identify the drift as due to a rotation or tilt, and even identify whether the rotation or tilt is clockwise or counter-clockwise by comparing the reflection spectra A), B), C) and D).

Fig. 13 shows a schematic illustration of a laser processing apparatus 10 according to a related embodiment of the invention, which differs from the laser processing apparatus 10 of Fig. 1 in that the constant spatial relation of the calibration reflectors 12a and 12b (and possibly 12c and 12d) is achieved by the calibration reflectors 12a and 12b being rigidly attached to a frame 13, rather than being attached to the work field 22. In the exemplary embodiment shown in Fig. 13, the laser processing apparatus is an AM-module with a housing enclosing the scanning unit 24, wherein the housing acts as a frame 13. In other related embodiments, the frame 13 can be independent of an optional housing. The frame 13 is rigidly attached to the laser processing module 20 and/or to the measurement module 30, for example by being attached to or being part of a housing thereof. Therefore, if a position and orientation of the laser processing module 20 and to the measurement module 30 can be assumed to be constant or nearly-constant with respect to the work field 22 and/or with respect to the scanning unit 24, possibly neglecting movements and/or fluctuations of the work field itself and/or of the laser processing module 20, in particular of the scanning unit 24, then a position and orientation of the frame 13 can be assumed to be constant or nearly-constant with respect thereto. Further, a position and orientation of the laser processing module 20 and to the measurement module 30 can be assumed to be constant or nearly-constant with respect to the work field 22 and/or with respect to the laser processing module 20, in particular of the scanning unit 24, possibly neglecting movements and/or fluctuations of the work field itself and/or of the laser processing module 20 itself, in particular of the scanning unit 24 itself, then a position and orientation of the frame 13 can be assumed to be constant or nearly-constant with respect to the work field 22 and/or with respect to the laser processing module 20, in particular with respect to the scanning unit 24. Thus, by being rigidly attached to the frame 13, the calibration reflectors 12a and 12b, which can be calibration reflectors corresponding to the embodiments of any of Fig. 3 and 10, keep the constant spatial relation with respect to the work field 22 and/or with respect to the laser processing module 20, in particular with respect to the scanning unit 24 (at least at an approximative level). In any case, the calibration reflectors, when attached to the frame 13, can accurately reflect drifts caused by the laser processing apparatus, for example by internal components of the laser processing apparatus, while possibly neglecting any drifts possibly caused by the work field itself and/or by the scanning unit itself.

Fig. 14 shows a schematic illustration of a laser processing apparatus 10 according to a related embodiment of the invention, which differs from the laser processing apparatus 10 of Fig. 1 and Fig. 13 in that the constant spatial relation of the calibration reflectors is achieved by having at least one movable calibration reflector, which can be calibration reflectors corresponding to the embodiments of any of Fig. 3 and 10, configured for being moved to different positions 12-1 and 12-2 with restricted degrees of freedom, while keeping the constant spatial relation. For example, the laser processing apparatus may include a one-dimensional guide element 25, fixedly arranged with respect to the work field 22 and/or with respect to the scanning unit 24, with the at least one movable calibration reflector being movable or slidable along the at least one-dimensional guide element 25 and lockable in each of the first position 12-1 and the second position 12-2. Alternatively, the element 25 may represent a pivoting element, like a pivoting arm with constant length, attached to the calibration reflector 12 and configured to pivotably move the calibration reflector, selectively, to position 12-1 or 12-2. The processing unit 40 can then determine drift shifts of the laser processing apparatus 10 based on variations of a path length of the measurement beam MB to and from the different positions 12-1 and 12-2 of the movable calibration reflector 12 and on corresponding angular deflection setting α of the scanning unit 24, see processes 102 and 104 in Fig. 4.

In some related embodiments not shown in the figures, a laser processing apparatus according to the invention can include different types of calibration reflectors, possibly combining one or more calibration reflectors as described for Figs. 1, 3 and/or 10, one or more calibration reflectors as described for Fig. 12 and one or more calibration reflectors as described for Fig. 13.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

## Claims

1. A laser processing apparatus (10) comprising:
a laser processing module (20) for laser-processing a workpiece on a work field (22);
a measurement module (30) for performing distance measurements using a measurement beam (MB), wherein the measurement module (30) is optically coupled with the laser processing module (20) to receive and output the measurement beam (MB) from and to the laser processing module (20);
at least one scanning unit (24) for scanning the measurement beam (MB) over the work field (22);
one or more calibration reflectors (12a, 12b) having a constant spatial relation with respect to the work field (22) and/or with respect to the at least one scanning unit (24); and
a processing unit (40) configured for determining drift shifts of the laser processing apparatus (10) based on measured variations of a path length of the measurement beam (MB) to and from the one or more calibration reflectors (12a, 12b) and on corresponding angular deflection setting (α) of the at least one scanning unit (24).

2. The laser processing apparatus (10) of claim 1, wherein the processing unit (40) is further configured for calibrating the laser processing module (20) based on the determined drift shifts.

3. The laser processing apparatus (10) of claim 1 or 2, wherein the one or more calibration reflectors (12a, 12b) comprise two or more calibration reflectors (12a, 12b), and wherein the processing unit (40) is configured for controlling the scanning unit (24) to direct the measurement beam (MB) to different calibration reflectors (12a, 12b) of the two or more calibration reflectors (12a, 12b), and for determining said drift shift as a function of the drift shifts determined for each of the two or more calibration reflectors (12a, 12b), wherein said function preferably is an average or median function.

4. The laser processing apparatus (10) of any of the preceding claims, wherein the one or more calibration reflectors (12a, 12b) comprise an even number of calibration reflectors (12a, 12b) pairwise arranged in front of each other on opposite sides of the work field (22), wherein the calibration reflectors (12a, 12b) are preferably pairwise arranged in front of each other on an axis of symmetry of the work field (22).

5. The laser processing apparatus (10) of any of the preceding claims, wherein at least some of the one or more calibration reflectors (12a, 12b) are fixed with respect to the work field (22), wherein at least some of the one or more calibration reflectors (12a, 12b) are preferably rigidly attached to the work field (22); and/or
preferably further comprising a frame (13) rigidly attached to the laser processing module (20) and to the measurement module (30), wherein at least some of the one or more calibration reflectors (12a, 12b) are rigidly attached to the frame (13).

6. The laser processing apparatus (10) of any of the preceding claims, wherein the one or more calibration reflectors (12a, 12b) comprises at least one movable calibration reflector that may be pivoted to different positions with respect to the work field (22) and/or with respect to the at least one scanning unit (24); and wherein the processing unit (40) is configured for determining drift shifts of the laser processing apparatus (10) based on variations of a path length of the measurement beam (MB) to and from said different positions of the movable calibration reflector and on corresponding angular deflection setting (α) of the scanning unit (24).

7. The laser processing apparatus (10) of any of the preceding claims, wherein at least one, preferably at least two, of the one or more calibration reflectors (12a, 12b) comprises a stepped reflection surface.

8. A method of determining a drift shift in a laser processing apparatus (10), wherein the laser processing apparatus (10) comprises:
a scanning unit (24) for scanning a laser beam over a work field (22); and
one or more calibration reflectors (12a, 12b) having a constant spatial relation with respect to the work field (22) and/or with respect to the at least one scanning unit (24);
wherein the laser processing apparatus (10) preferably is a laser processing apparatus (10) according to any of the preceding claims,
and wherein the method comprises:
performing interferometric measurements with a measurement laser beam (MB) directed by the scanning unit (24) to each of the one or more calibration reflectors (12a, 12b) to determine, for each of the one or more calibration reflectors (12a, 12b), one or more corresponding variations of a path length of the measurement laser beam (MB);
detecting, for each of the one or more calibration reflectors (12a, 12b), one or more corresponding angular deflection settings (α) of the scanning unit (24); and
determining a drift shift based on said one or more corresponding variations of a path length of the laser measurement beam (MB) and on said one or more corresponding angular deflection settings (α) of the scanning unit (24).

9. The method of claim 8, wherein the one or more calibration reflectors (12a, 12b) comprise two or more calibration reflectors (12a, 12b), and wherein method further comprises:
using the scanning unit (24) to direct the measurement laser beam (MB) to each of the two or more calibration reflectors (12a, 12b), corresponding in each case to a respective angular deflection setting (α) of the scanning unit (24);
performing said interferometric measurements to determine, for each of the two or more calibration reflectors (12a, 12b), two or more corresponding variations of a path length of the measurement laser beam (MB);
detecting, for each of the two or more calibration reflectors (12a, 12b), the two or more respective angular deflection settings (α) of the scanning unit (24);
determining, for each of the two or more calibration reflectors (12a, 12b), a partial drift shift based on said two or more corresponding variations of the path length of the measurement laser beam (MB) and on said two or more corresponding angular deflection settings (α) of the scanning unit (24); and
determining said drift shift as a function of the partial drift shifts, wherein said function preferably is an average or median function.

10. The method of claim 8 or 9, wherein the laser processing apparatus (10) comprises at least one movable calibration reflector as defined in claim 9, and wherein method further comprises:
moving the at least one movable calibration reflector to different positions with respect to the work field (22) and/or with respect to the at least one scanning unit (24);
using the scanning unit (24) to direct the measurement laser beam (MB) to each of the different positions of the at least one movable calibration reflector, corresponding in each case to a respective angular deflection setting (α) of the scanning unit (24);
performing said interferometric measurements to determine, for each of the different positions of the at least one movable calibration reflector, corresponding variations of a path length of the measurement laser beam (MB);
detecting, for each of the different positions of the at least one movable calibration reflector, respective angular deflection settings (α) of the scanning unit (24);
determining, for each of the different positions of the at least one movable calibration reflector, a partial drift shift based on said corresponding variations of the path length of the measurement laser beam (MB) and on said corresponding angular deflection settings (α) of the scanning unit (24); and
determining said drift shift as a function of the partial drift shifts, wherein said function preferably is an average or median function.

11. The method of any of claims 8 to 10, wherein a drift shift is determined as a vertical drift ΔZ corresponding to ΔZ = ΔL / cos α, wherein ΔL is a variation of the path length of the measurement laser beam (MB) and α is an angular deflection setting (α) of the scanning unit (24) corresponding to an angle of the measurement laser beam (MB) with respect to a vertical direction.

12. The method of any of claims 8 to 11, wherein a drift shift is determined as a horizontal drift ΔY corresponding to ΔY = ΔL / sin α, wherein ΔL is a variation of the path length of the measurement laser beam (MB) and α is an angular deflection setting (α) of the scanning unit (24) corresponding to an angle of the laser beam with respect to a vertical direction.

13. The method of any of claims 8 to 12, wherein the laser processing apparatus (10) comprises at least one calibration reflector with a stepped reflection surface as defined in claim 10, and wherein method further comprises using the scanning unit (24) to direct the measurement laser beam (MB) to each of said at least one calibration reflector with a stepped reflection surface, detecting, for each of said at least one calibration reflector with a stepped reflection surface, a variation in a reflection spectrum of the measurement laser beam (MB), and determining said drift shift based on the detected at least one variation of the reflection spectrum.

14. The method of claim 13, wherein the laser processing apparatus (10) comprises at least two calibration reflectors, each with a stepped reflection surface as defined in claim 10, the at least two calibration reflectors being preferably in front of each other on opposite sides of the work field (22), and wherein the method further comprises using the scanning unit (24) to direct the measurement laser beam (MB) to each of said at least two calibration reflectors, detecting a variation in a reflection spectrum of the measurement laser beam (MB) for each of said at least two calibration reflectors, and determining said drift shift based on the detected at least two variations of the reflection spectrum, in particular on a comparison thereof.

15. A method of compensating drift shifts in a laser processing apparatus (10) comprising:
determining a drift shift according to the method of any of claims 8 to 14; and
adjusting the laser processing apparatus (10) to compensate said drift shift.
